# EUROPÄISCHE PATENTSCHRIFT

(11) **EP 2 802 504 B1**
(45) Veröffentlichungstag und Bekanntmachung des Hinweises auf die Patenterteilung: **18.05.2016**
(21) Anmeldenummer: 13701565.7
(22) Anmeldetag: 11.01.2013
(51) Int. Cl.: B62D 1/181, F16H 25/24

(54) **SPINDELTRIEB ZUR HÖHENVERSTELLUNG EINER ELEKTRISCH VERSTELLBAREN LENKSÄULE**
SPINDLE DRIVE FOR ADJUSTING THE HEIGHT OF AN ELECTRICALLY ADJUSTABLE STEERING COLUMN
ENTRAÎNEMENT À VIS POUR LE RÉGLAGE EN HAUTEUR D'UNE COLONNE DE DIRECTION RÉGLABLE ÉLECTRIQUEMENT

(30) Priorität: 14.01.2012 DE 102012000635
(43) Veröffentlichungstag der Anmeldung: 19.11.2014
(73) Patentinhaber: Daimler AG, 70327 Stuttgart (DE)
(72) Erfinder: BORN, Christian, 22589 Hamburg (DE); BRAEUER, Karsten, 21255 Tostedt (DE); HARMS, Torsten, 21129 Hamburg (DE); MALYSCHEW, Wjatscheslaw, 21149 Hamburg (DE)
(74) Vertreter: JENSEN & SON
(86) Internationale Anmeldenummer: PCT/EP2013/000068
(87) Internationale Veröffentlichungsnummer: WO 2013/104545

(56) Entgegenhaltungen:
- DE-A1- 10 163 974
- FR-A- 1 410 866

## Beschreibung

Die Erfindung betrifft einen Spindeltrieb zur Höhenverstellung einer elektrisch verstellbaren Lenksäule mit einer Verstellspindel.

Eine im Aufbau vereinfachte Kraftfahrzeuglenksäuleneinheit mit einem Lenksäulengehäuse und darin angeordneter Lenksäule und einer elektrisch angetriebenen Verstellvorrichtung sowohl zur Längsverstellung als auch zur Neigungsverstellung der Lenksäule wird in der DE 196 41 152 A1 beschrieben. Diese Verstellvorrichtung hat zum einen eine elektrische Antriebseinheit zum Drehantrieb einer Verstellspindel und zum anderen mindestens zwei auf der Verstellspindel angeordnete, in Axialrichtung der Verstellspindel mit Axiallagern beweglich gelagerte Spindelmuttern. Zur Längsbewegung und zur Neigungsbewegung sind mindestens je ein Verstellmechanismus sowie je Bewegungsrichtung eine Schaltvorrichtung vorgesehen, wobei zwischen der jeweiligen Schaltvorrichtung und der der Schaltvorrichtung benachbarten Spindelmutter eine kraftschlüssige Verbindung hergestellt werden kann.

Ferner ist eine Kraftfahrzeug-Lenkeinheit mit elektrischer Neigungsverstellung mit einer verbesserten Steifigkeit der Lenksäule in vertikaler und horizontaler Richtung aus der DE 101 63 974 A1 bekannt. Die dort offenbarte Kraftfahrzeug-Lenkeinheit weist einen auf einer Seite der Lenksäule angeordneten Neigungsverstellmechanismus zum Umwandeln einer rotatorischen Antriebskraft des Elektromotors in eine gradlinige Bewegung, um so die Neigung der Lenksäule einzustellen, und einen auf der anderen Seite der Lenksäule angeordneten Gleitabschnitt auf, der über eine Passung in gleitendem Kontakt mit einer feststehenden Seite steht, um so die Lenksäule beim Einstellen der Neigung gleiten zu lassen. Für die Neigungsverstellung ist eine Verstellspindel, dort Schraubenwelle genannt, beschrieben, die an ihrem oberen und unteren Ende drehbar in Axialrillenkugellagern gelagert ist. Das obere Lager ist mit einer Befestigungsschraube fixiert, auf der ein Mittel aufgebracht ist, das ein Lösen verhindert. Durch Festziehen dieser Schraube bis auf ein vorbestimmtes Drehmoment werden die Lager so vorgespannt, dass sie die Schraubenwelle am oberen und unteren Ende in Querrichtung sicher abstützen sollen.

So werden bislang die Verstellspindeln für den Neigungsmechanismus einer Lenksäule schwimmend mit Axialrillenkugel- oder Nadellagern gelagert, die mit einer Tellerfeder oder einer Mutter gespannt werden.

Aufgrund von Spiel infolge Bauteil- und Fertigungstoleranzen fängt die zwischen den Lagern eingespannte Verstellspindel im Betätigungsbetrieb beim Verstellen an zu schwingen, was zu unerwünschten Geräuschen und zu Verschleiß führt. Um dies zu vermeiden, ist bislang eine exakte Ausrichtung des Spindeltriebs mit ganz erheblichem Aufwand notwendig.

Ausgehend von diesem Stand der Technik ist es Aufgabe der vorliegenden Erfindung, einen Spindeltrieb für eine elektrisch verstellbare Lenksäule mit einer Verstellspindel für die Höhenverstellung zu schaffen, die die Schwingungsentstehung im Verstellbetrieb vermeidet und so Geräuschentwicklung und Verschleiß unterdrückt und ferner mit geringerem Aufwand montiert werden kann.

Diese Aufgabe wird durch einen Spindeltrieb mit den Merkmalen des Anspruchs 1 gelöst.

Ferner wird die Aufgabe, eine elektrisch verstellbare Lenksäule mit einer Verstellspindel für die Höhenverstellung zu schaffen, bei der keine Schwingungen im Verstellbetrieb aufgrund von Spiel durch Fertigungs- und Bauteiltoleranzen entstehen, die zu unerwünschten Geräuschen und Verschleiß führen, durch eine Lenksäule mit den Merkmalen des Anspruchs 7 gelöst.

Weiterbildungen der Vorrichtungen sind in den Unteransprüchen ausgeführt.

Ein erfindungsgemäßer Spindeltrieb für eine Höhenverstellung einer elektrisch verstellbaren Lenksäule umfasst eine Verstellspindel, die mittels zweier Lager drehbar gelagert ist. Erfindungsgemäß weist die Verstellspindel zwei Spannelemente auf, die an einander zugewandten Seiten einen Zentrierkonus haben. So wird die Verstellspindel mittels der Spannelemente an den zwei Lagern verspannt, an deren voneinander abgewandten Außenseiten die Spannelemente mit den Zentrierkonen anliegen. Hierzu sind die Außenseiten der Lager mit einer Gegenkontur zu dem jeweils anliegenden Zentrierkonus ausgebildet. Durch die mit den Konen zentrierte Verspannung der Spindel an den Lagern entstehen keine Schwingungen im Verstellbetrieb aufgrund der Bauteilund Fertigungstoleranzen. Das beim Verstellen entstehende Geräusch kann so verringert werden und so auch der Ausschuss gesenkt werden, der durch Spindeltriebe mit unerwünschter Geräuschentwicklung beim Verstellen bedingt ist. Neben der Geräuschoptimierung und Senkung des Ausschusses wird auch die Qualität des Spindeltriebs verbessert, da der Verschleiß in der Höhenverstellung durch die Vermeidung der Schwingungsentstehung reduziert wird.

Eines der Spannelemente kann durch einen verbreiterten Kopf der Spindel gebildet sein, der dann mit dem Zentrierkonus auf der entsprechenden, dem Lager zugewandten Seite des Kopfes ausgebildet ist.

Das zweite Spannelement kann durch einen Greifring gebildet werden, der auf das von dem Kopf abgewandte Ende der Spindel aufgebracht wird und der mit dem Zentrierkonus ausgebildet ist. Beim Aufbringen des Greifrings wird dessen Zentrierkonus dem Lager zugewandt angeordnet.

Dieser Greifring kann aus einem Kunststoff oder aus einem Elastomer gefertigt sein. Das Aufbringen auf die Spindel kann durch Aufpressen erfolgen. Ferner kann der Greifring einen zusätzlichen Lagerstützring oder eine Tellerfeder tragen. Hierbei wird für einen Greifring aus Elastomer bevorzugt, dass der Greifring auf den Lagerstützring bzw. die Tellerfeder aufvulkanisiert wird.

So ist die Montage im Vergleich zum Stand der Technik deutlich vereinfacht, da durch die Zentrierkonen, die die Spindel an den Lagern verspannen, die aufwändige Ausrichtung entfällt.

Als eine Alternative zu dem Greifring als zweites Spannelement kann eine Schraubmutter vorgesehen sein, die auf das von dem Kopf abgewandte Ende der Spindel aufgebracht wird und mit dem Zentrierkonus ausgebildet ist. Um ein Lösen im Betrieb zu vermeiden kann die Schraubmutter ein selbsthemmendes Gewinde aufweisen.

Für die zwei die Verstellspindel lagernden Lager können insbesondere Schrägkugellager, bevorzugt in O-Anordnung, eingesetzt werden, wodurch die Führung der Spindel noch weiter zentriert und straffer wird.

Ferner bezieht sich die Erfindung auf eine elektrisch verstellbare Lenksäule mit einem Höhenverstellmechanismus, der einen Spindeltrieb mit einer mittels zweier Lager drehbar gelagerte Verstellspindel umfasst. Durch den Einsatz eines Spindeltriebs gemäß einer erfindungsgemäßen Ausführungsform mit der durch die Zentrierkonen der Spannelemente an den Lagern verspannte Verstellspindel wird eine Lenksäule geschaffen, deren Höhenverstellung ohne unerwünschte Geräusche möglich ist, und die durch den infolge der Schwingungsunterdrückung verringerten Verschleiß eine höhere Lebensdauer des Verstellmechanismus aufweist.

Diese und weitere Vorteile werden durch die nachfolgende Beschreibung unter Bezug auf die begleitenden Figuren dargelegt. Der Bezug auf die Figuren in der Beschreibung dient dem erleichterten Verständnis des Gegenstands. Gegenstände oder Teile von Gegenständen, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- Fig. 1: in einer Schnittansicht die Lagerung einer Höhenverstelleinheit einer elektrisch verstellbaren Sicherheitslenksäule mit zwei Axialrillenkugellagern aus dem Stand der Technik,
- Fig. 2: in einer Schnittansicht die Lagerung einer Höhenverstelleinheit einer elektrisch verstellbaren Sicherheitslenksäule mit einem Axialrillenkugellager und einem Nadellager aus dem Stand der Technik,
- Fig. 3: in einer Schnittansicht die erfindungsgemäße Lagerung einer Höhenverstelleinheit einer elektrisch verstellbaren Sicherheitslenksäule mit zwei Schrägkugellagern.

Die erfindungsgemäße Vorrichtung bezieht sich auf die Höhenverstellung einer elektrisch verstellbaren Lenksäule, mittels eines Spindeltriebs, der eine in zwei Lagern 6 drehbar gelagerte Verstellspindel 1 umfasst.

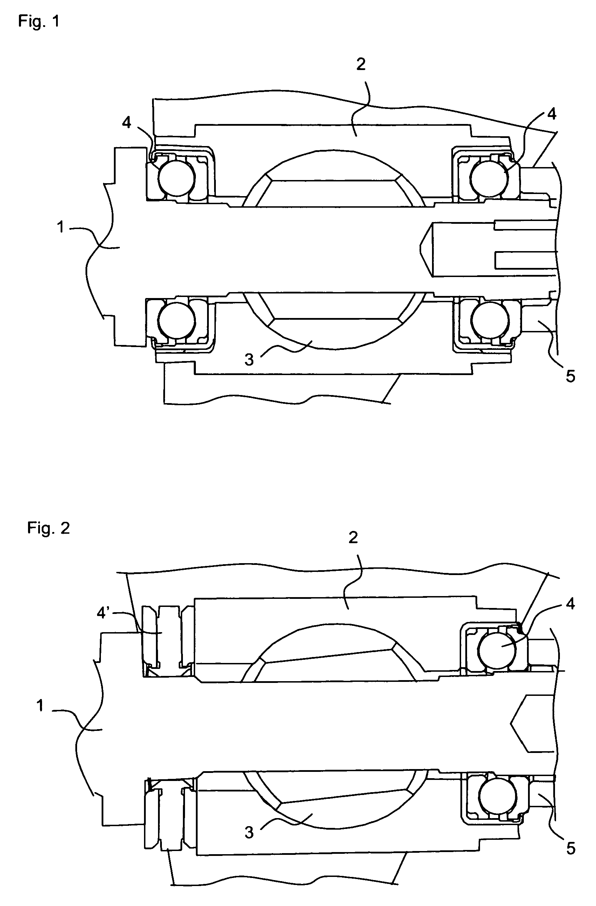

Für die Höhen- bzw. Neigungseinstellung weisen die elektrisch verstellbaren Lenksäulen meist eine Verstellspindel 1 auf. Fig. 1 und 2 zeigen zwei aus dem Stand der Technik bekannte Lagerungsvarianten der Höhenverstelleinheit. Bislang wird die Spindel 1 von zwei Lagern 4,4' gehalten; Fig. 1 zeigt dazu die Lagerung mit zwei Axialrillenkugellagern 4 und Fig. 2 die Lagerung mit einem Axialrillenkugellager 4 und einem Nadellager 4'. Die Lager 4,4' sitzen in einem Achslagerbock 2, in dem der Lagerbock 3 der Höhenverstellung aufgenommen ist, und werden mit einer Sicherungsmutter 5 gespannt. Im Betätigungsbetrieb fängt die Spindel 1 durch Spiel zwischen Lager und Spindel aufgrund von Bauteil- und Fertigungstoleranzen an zu schwingen, was zu unerwünschten Geräuschen und zu Verschleiß führt. Um dies zu vermeiden, ist bislang eine exakte Ausrichtung des Spindeltriebs mit ganz erheblichem Aufwand notwendig.

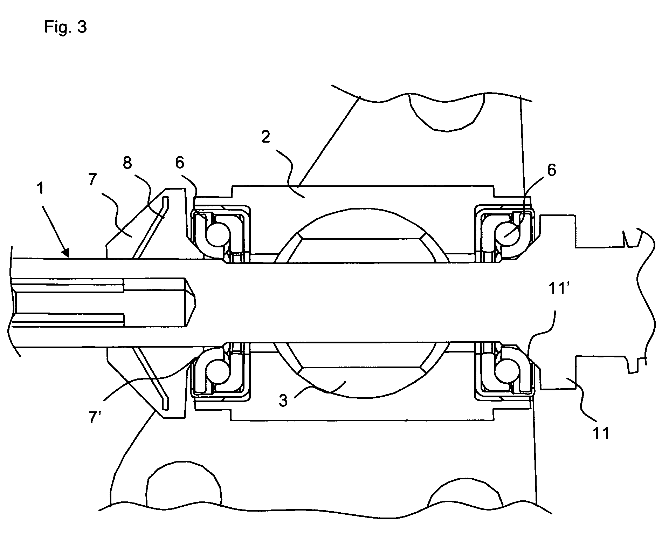

Um in einfacher Weise einen Spindeltrieb, wie beispielhaft in Fig. 3 dargestellt, für die Verstellung der Lenksäule zu schaffen, der geräuscharm und verschleißreduziert arbeitet, wird erfindungsgemäß vorgeschlagen, dass die Spindel 1 zwei Spannelemente 7,11 mit jeweils einem Zentrierungskonus 7',11' trägt, mittels derer die Spindel 1 an den beiden Lagern 6 verspannt wird, wobei die Spannelemente 7,11 mit ihrem Konus 7',11' an einer entsprechenden Gegenkontur der Außenseite der Lager 6 anliegen. Die Konen 7',11' sind daher an einander zugewandten Seiten der Spannelemente 7,11 angeordnet.

Dadurch, dass sich die Spindel 1 bei der Montage durch die Konen 7',11' in eine präzise definierte Position selbst zentriert, wird bei der Verspannung an den Lagern 6 eine stramme Lagerung der Spindel 1 erreicht, so dass das Schwingen unterbunden wird.

In einer bevorzugten Ausführungsform wird, wie in Fig. 3 dargestellt, eines der beiden Spannelemente 7,11 durch einen verbreiterten Spindelkopf 11 gebildet, an dem der Konus 11' ausgeformt ist.

Weiter kann das andere Spannelement 7 vorzugsweise durch einen Ring 7 gebildet werden, der zur Verspannung der Lager 6 auf das andere Ende der Spindel 1 aufgebracht wird. Der Ring 7 hat an der dem Kopf 11 zugewandten Seite ebenfalls einen Konus 7'.

Der Ring 7 kann vorzugsweise aus einem Kunststoff oder einem Elastomer bestehen und ist auf die Spindel 1 aufgepresst. Zusätzlich kann der Ring 7 in sich einen Lagerstützring 8 oder eine Tellerfeder tragen, der ein unbeabsichtigtes und/oder selbsttätiges Herauslösen des Ringes 7 aus der Spannposition verhindert. Vorzugsweise ist der Elastomerring 7 auf den Lagerstützring bzw. die Tellerfeder 8 aufvulkanisiert.

Wie in Fig. 3 gezeigt, sind die beiden Lager 6 besonders bevorzugt als Schrägkugellager 6 ausgestaltet, wodurch die Führung der Spindel 1 noch weiter zentriert und straffer wird.

Die erfindungsgemäße Lagerung mit der Selbstzentrierung der Antriebsspindel 1 durch die entsprechende Gestaltung der Spannelemente 7,11 mit den Zentrierkonen 7',11' und mit den Schrägkugellagern 6 gestattet mit dem Greifring 7 das Verspannen der Lager 6 kraftgesteuert.

Die beiden Schrägkugellager 6 werden in O-Anordnung montiert. Ein Schrägkugellager 6 kann beispielsweise 20 Kugeln mit einem 2 mm-Durchmesser aufweisen. Selbstverständlich können auch andere Kugelzahlen mit anderen entsprechend passenden Durchmessern gewählt werden.

Statt des Spannrings 7 kann auch eine Schraubmutter mit konischem Ansatz zur Verwendung kommen. Allerdings ist hier das Aufschraubmoment unterschiedlich groß und somit keine definierte Verspannung möglich. Um die Gefahr des Loslösens im Betrieb zu unterbinden, können weitere konstruktive Vorkehrungen an der Mutter wie beispielsweise ein selbsthemmendes Gewinde vorgesehen sein.

## Patentansprüche

1. Spindeltrieb zur Höhenverstellung einer elektrisch verstellbaren Lenksäule, der eine in zwei Lagern (6) drehbar gelagerte Verstellspindel (1) umfasst,
**dadurch gekennzeichnet, dass**
- die Verstellspindel (1) zwei Spannelemente (7,11) umfasst, die an ihren einander zugewandten Seiten einen Zentrierkonus (7', 11') aufweisen, und die Verstellspindel (1) mittels der Spannelemente (7,11) an den zwei Lagern (6) verspannt angeordnet ist, indem die Spannelemente (7,11) an den voneinander abgewandten Außenseiten der Zentrierkonen (7',11') anliegen, wobei die Außenseiten der Lager (6) mit einer Gegenkontur zu dem jeweils anliegenden Zentrierkonus (7',11') ausgebildet sind.

2. Spindeltrieb nach Anspruch 1,
**dadurch gekennzeichnet, dass**
ein erstes Spannelement (11) der Spannelemente (7,11) durch einen verbreiterten Kopf (11) der Spindel (1) gebildet wird, der mit dem Zentrierkonus (11') ausgebildet ist.

3. Spindeltrieb nach Anspruch 2,
**dadurch gekennzeichnet, dass**
ein zweites Spannelement (7) der Spannelemente (7,11) durch einen Greifring (7) gebildet wird, der auf das von dem Kopf (11) abgewandte Ende der Spindel (1) aufgebracht wird und der mit dem Zentrierkonus (7') ausgebildet ist.

4. Spindeltrieb nach Anspruch 3,
**dadurch gekennzeichnet, dass**
der Greifring (7)
- aus einem Kunststoff oder aus einem Elastomer ist, und/oder
- auf die Spindel (1) aufgepresst ist, und/oder
- einen zusätzlichen Lagerstützring (8) oder eine Tellerfeder trägt, wobei der Greifring (7) aus Elastomer bevorzugt auf den Lagerstützring (8) oder die Tellerfeder aufvulkanisiert ist.

5. Spindeltrieb nach Anspruch 1 oder 2,
**dadurch gekennzeichnet, dass**
ein zweites Spannelement (7) der Spannelemente (7,11) durch eine Schraubmutter gebildet wird, die auf das von dem Kopf (11) abgewandte Ende der Spindel (1) aufgebracht wird und die mit dem Zentrierkonus (7') ausgebildet ist und die bevorzugt ein selbsthemmendes Gewinde aufweist.

6. Spindeltrieb nach zumindest einem der Ansprüche 1 bis 5,
**dadurch gekennzeichnet, dass**
die Lager (6) Schrägkugellager (6) sind.

7. Spindeltrieb nach zumindest einem der Ansprüche 1 bis 6,
**dadurch gekennzeichnet, dass**
die Schrägkugellager (6) in O-Anordnung angeordnet sind.

8. Elektrisch verstellbare Lenksäule mit einem Höhenverstellmechanismus, der einen Spindeltrieb mit einer mittels zweier Lager (6) drehbar gelagerte Verstellspindel (1) umfasst,
**dadurch gekennzeichnet, dass**
der Spindeltrieb ein Spindeltrieb nach zumindest einem der Ansprüche 1 bis 7 ist.

## Claims

1. Spindle drive for adjusting the height of an electrically adjustable steering column, comprising an adjusting spindle (1) rotatably mounted in two bearings (6),
**characterised in that**
- the adjusting spindle (1) comprises two clamping elements (7, 11), which have a centring cone (7', 11') on the sides which face one another, and **in that** the adjusting spindle (1) is clamped to the two bearings (6) by means of the clamping elements (7, 11) by having the clamping elements (7, 11) bear against the outsides of the centring cones (7', 11'), which are averted from one another, the outsides of the bearings (6) being provided with a mating contour to match the respective centring cone (7', 11').

2. Spindle drive according to claim 1,
**characterised in that**
a first clamping element (11) of the clamping elements (7, 11) is represented by a widened head (11) of the spindle (1), which is designed with the centring cone (11').

3. Spindle drive according to claim 2,
**characterised in that**
a second clamping element (7) of the clamping elements (7, 11) is represented by a gripping ring (7), which is fitted to the end of the spindle (1) which is remote from the head (11) and which is designed with the centring cone (7').

4. Spindle drive according to claim 3,
**characterised in that**
the gripping ring (7)
- is made of a plastic material or an elastomer, and/or
- is pressed onto the spindle (1), and/or
- supports an additional bearing support ring (8) or a Belleville spring, the elastomer gripping ring (7) being preferably vulcanised onto the bearing support ring (8) or the Belleville spring.

5. Spindle drive according to claim 1 or 2,
**characterised in that**
a second clamping element (7) of the clamping elements (7, 11) is represented by a screw nut, which is fitted to the end of the spindle (1) which is remote from the head (11) and which preferably has a self-locking thread.

6. Spindle drive according to one or more of claims 1 to 5,
**characterised in that**
the bearings (6) are angular ball bearings (6).

7. Spindle drive according to one or more of claims 1 to 6,
**characterised in that**
the angular ball bearings (6) are arranged in an O-configuration.

8. Electrically adjustable steering column having a height adjustment mechanism comprising a spindle drive with an adjusting spindle (1) rotatably mounted by means of two bearings (6),
**characterised in that**
the spindle drive is a spindle drive according to one or more of claims 1 to 7.

## Revendications

1. Actionneur d'arbre destiné à régler la hauteur d'une colonne de direction réglable électriquement, qui comprend un arbre de réglage (1) monté en rotation dans deux paliers (6), **caractérisé en ce que** l'arbre de réglage (1) comprend deux éléments de serrage (7, 11) qui présente sur leurs faces se faisant face un cône de centrage (7', 11') et l'arbre de réglage (1) est serré au moyen des éléments de serrage (7, 11) sur les deux paliers (6), de sorte que les éléments de serrage (7, 11) se trouvent sur les faces extérieures orientées à l'opposé l'un de l'autre des cônes de centrage (7', 11'), les faces extérieures du palier (6) sont conçues par un contour complémentaire à chaque cône de centrage (7', 11 ') adjacent.

2. Actionneur d'arbre selon la revendication 1, **caractérisé en ce qu'**un premier élément de serrage (11) parmi les éléments de serrage (7, 11) est formé par une tête élargie (11) de l'arbre (1) qui est conçu par le cône de centrage (11 ').

3. Actionneur d'arbre selon la revendication 2, **caractérisé en ce qu'**un second élément de serrage (7) parmi les éléments de serrage (7, 11) est formé par une bague de préhension (7) qui est montée sur l'extrémité de l'arbre (1) orientée à l'opposé de la tête (11) et qui est conçue par le cône de centrage (7').

4. Actionneur d'arbre selon la revendication 3, **caractérisé en ce que** la bague de préhension (7)
- est constituée d'une matière plastique ou d'un élastomère, et/ou
- est emmanchée en force sur l'arbre (1), et/ou
- porte une bague support de palier supplémentaire (8) ou une rondelle conique, la bague de préhension (7) en élastomère étant vulcanisée de préférence sur la bague support de palier (8) ou sur la rondelle conique.

5. Actionneur d'arbre selon la revendication 1 ou 2, **caractérisé en ce qu'**un second élément de serrage (7) parmi les éléments de serrage (7, 11) est formé par un écrou fileté qui est monté sur l'extrémité de l'arbre (1) orientée à l'opposé de la tête (11) et qui est conçue par le cône de centrage (7') et qui présente de préférence un filetage autobloquant.

6. Actionneur d'arbre selon au moins une quelconque des revendications 1 à 5, **caractérisé en ce que** les paliers (6) sont des paliers à billes à portée oblique.

7. Actionneur d'arbre selon au moins une quelconque des revendications 1 à 6, **caractérisé en ce que** les paliers à billes à portée oblique (6) sont disposés selon un agencement en O.

8. Colonne de direction réglable électriquement comprenant un mécanisme de réglage en hauteur qui comprend un actionneur d'arbre doté d'un arbre de réglage (1) monté en rotation à l'aide des deux paliers (6), **caractérisé en ce que** l'actionneur d'arbre est un actionneur d'arbre selon au moins l'une des revendications 1 à 7.
